Europäisches Patentamt

European Patent Office

Office européen des brevets

(19)

(11) Numéro de publication: **0 207 046**

**A2**

(12)

# DEMANDE DE BREVET EUROPEEN

(21) Numéro de dépôt: **86870088.1**

(22) Date de dépôt: **19.06.86**

(51) Int. Cl.⁴: **C08G 18/42** , C08G 18/73 ,
 C08G 18/75 , C08L 75/06 ,
 C09D 3/00

(30) Priorité: **20.06.85 LU 85966**

(43) Date de publication de la demande:
 **30.12.86 Bulletin 86/52**

(84) Etats contractants désignés:
 **AT BE CH DE FR GB IT LI LU NL SE**

(71) Demandeur: **LABOFINA S.A.**
 **52, rue de l'Industrie**
 **B-1040 Bruxelles(BE)**

(72) Inventeur: **Vranken, Paul**
 **Serge Ecksteinlaan 25**
 **B-1730 Zellik(BE)**
 Inventeur: **Braeken, Jozef**
 **Lindestraat 88**
 **B-9470 Denderleeuw(BE)**
 Inventeur: **Gillard, Michel**
 **Rue d'Ardenelle 85**
 **B-5830 Corroy-Le-Chateau(BE)**

(54) **Polyesteruréthanes hydroxy-fonctionnels, leur préparation et compositions les contenant.**

(57) On décrit de nouveaux polyesteruréthanes hydroxy-fonctionnels qui peuvent être préparés par réaction d'un polyester comportant environ 2 groupes hydroxyles par molécule et ayant un indice hydroxyle compris entre 30 et 260, avec un diisocyanate aliphatique ou cycloaliphatique de telle manière que le polesteruréthane obtenu ait un indice hydroxyle compris entre 10 et 120.

On décrit également des compositions de peinture pour revêtement de supports métalliques ayant des propriétés améliorées, comprenant comme résine les polyesteruréthanes de l'invention.

EP 0 207 046 A2

## POLYESTERURETHANES HYDROXY-FONCTIONNELS LEUR PREPARATION ET COMPOSITIONS LES CONTENANT.

La présente invention concerne des polyesteruréthanes hydroxy-fonctionnels qui, incorporés dans des compositions de peinture pour métal, donnent des revêtements ayant des propriétés améliorées. En particulier, elle concerne des polyesteruréthanes hydroxy-fonctionnels linéaires.

Elle concerne également un procédé de préparation de ces polyesteruréthanes hydroxy-fonctionnels, linéaires.

Elle concerne aussi des compositions de peinture pour revêtement de supports métalliques, et un procédé de revêtement pour supports métalliques utilisant ces compositions.

Les polyesters hydroxy-fonctionnels sont bien connus dans l'état de la technique. Ils sont par exemple décrits, ainsi que des compositions de peinture les contenant, dans les brevets britanniques GB-1.518.495 et GB-1.522.889 et dans la demande de brevet européen EP-83.139, mais malheureusement ces polyesters hydroxy-fonctionnels ne permettent généralement pas d'avoir une bonne balance des propriétés mécaniques.

Ainsi, pour les revêtements obtenus, on recherche notamment dans l'industrie de la tôle prélaquée de bonne propriétés d'adhérence ainsi qu'un compromis entre une bonne élasticité et une bonne dureté. Il serait difficile de définir des valeurs minimales : en effet, les propriétés des revêtements dépendent non seulement de la composition mais également de variables comme les conditions de prétraitement, les conditions de cuisson et l'épaisseur ou la nature du support.

Le plus souvent, avec les polyesters hydroxy-fonctionnels connus, l'amélioration d'une propriété s'effectue toujours au détriment des autres. De fait, en règle générale, il est connu que si l'on augmente le poids moléculaire d'un polyester, on augmente la flexibilité du révêtement au détriment de sa dureté. On observe le même résultat si l'on accroît dans ce polyester la quantité de diacides aliphatiques. Par contre, si l'on accroît dans ce polyester la quantité de diacides aromatiques, l'on améliore la dureté du revêtement au détriment de la flexibilité.

Il existe dès lors un besoin pour des polymères hydroxy-fonctionnels qui, incorporés dans des compositions de peinture pour revêtement de suppports métalliques, donnent des revêtements ayant des propriétés améliorées, sans influence néfaste sur d'autres propriétés, ainsi que pour des compositions de peinture améliorées utilisant ces polymères et destinées en particulier à l'industrie de la tôle prélaquée.

La Demanderesse a trouvé de manière surprenante que la modification de certains polyesters hydroxy-fonctionnels avec un diisocyanate aliphatique ou cycloaliphatique conduit à des polyesteruréthanes hydroxy-fonctionnels qui, incorporés dans des compositions de peinture pour revêtement de supports métalliques, donnent des revêtements ayant des propriétés améliorées tout en conservant une bonne balance des autres propriétés.

La Demanderesse a également trouvé que des peintures primaires pour tôles métalliques à base de ces polyesteruréthanes possèdent des propriétés d'adhérence nettement améliorées tant du point de vue adhérence sur acier, qu'adhérence sur acier, qu'adhérence vis-à-vis des peintures de finition.

De plus, non seulement les revêtements à base de polyesteruréthane de l'invention présentent des propriétés améliorées par rapport à ceux à base des polyesters correspon dants, mais encore ces propriétés sont au moins équivalentes à celles que l'on obtient avec des produits disponibles commercialement. Sans être lié par une théorie, on pense que l'amélioration des propriétés d'adhérence est peut-être à la base de l'amélioration du compromis flexibilité-dureté.

Les polyesteruréthanes hydroxy-fonctionnels de l'invention sont caractérisés en ce qu'ils consistent en le produit de réaction d'un polyester comportant environ deux groupes hydroxyles par molécule et ayant un indice hydroxyle compris entre 30 et 260, avec un diisocyanate aliphatique ou cycloaliphatique de telle manière que le polyesteruréthane obtenu ait un indice hydroxyle compris entre 10 et 120.

Le procédé de préparation des polyesteruréthanes hydroxy-fonctionnels de l'invention est caractérisé en ce que l'on fait réagir, en solution dans un solvant aromatique et à une température supérieure à 100°C, le polyester avec de 3 à 35 % de son poids du diisocyanate ajouté progressivement, et en ce que l'on récupère le polyesteruréthane hydroxy-fonctionnel.

Les compositions de peinture pour revêtement de supports métalliques selon l'invention ayant des propriétés améliorées, comprenant une résine, un agent réticulant et un solvant de la résine, contenant en plus facultativement un ou plusieurs pigments, colorants et/ou additifs, sont caractérisées en ce qu'elles comprennent comme résine un polyesteruréthane obtenu selon le procédé de l'invention.

Les revêtements de surfaces métalliques de l'invention sont caractérisés en ce qu'ils sont obtenus à partir d'une composition de peinture selon l'invention.

Les polyesters hydroxy-fonctionnels que l'on peut utiliser comme produit de départ sont les polyesters comportant environ deux groupes hydroxyles par molécule et ayant un indice hydroxyle (exprimé en mg KOH/g) compris entre 30 et 260, et de préférence entre 50 et 200.

On utilise comme polyester hydroxy-fonctionnel une résine préparée à partir d'un ou plusieurs alcools aliphatiques et/ou cycloaliphatiques di-, tri- et/ou multivalents et facultativement monovalents, mais de préférence bivalents, et d'un ou plusieurs acides carboxyliques aliphatiques, cycloaliphatiques et/ou aromatiques di-, tri-et/ou multivalents et facultativement monovalents, et/ou de dérivés de ces alcools ou acides carboxyliques tels que des composés époxy, des esters ou des anhydrides d'acide.

Avantageusement, on utilise des polyesters hydroxy-fonctionnels linéaires à taux de fonctionalité d'environ 2. On a constaté que la présence d'un trialcool est tolérée pour former ce polyester pour autant que l'indice de fonctionalité du polyester ne dépasse pas environ 2,1.

Parmi les exemples d'alcools ou de dérivés, on peut citer l'alcool laurique, l'alcool benzylique, le cyclohexanol, l'éthylène glycol, le propanediol-1,2, l'oxyde de propylène, le propanediol-1,3, le diméthyl-2,2 propanediol-1,3, le butanediol-1,2, le butanediol-1,3, le butanediol-1,4, le pentanediol-1,5, le méthyl-3 pentanediol-1,5, l'hexanediol-1,6, l'éthyl-2 hexanediol-1,6, le triméthyl-2,3,4 hexanediol-1,6, le diméthylol-1,4 cyclohexane, le bis(hydroxy-4 cyclohexyl)-2,2 propane, le bis(p-phénylèneoxyéthanol)-2,2 propane, le bis(p-phénylèneoxypropanol-2)-2,2 propane, le glycérol, le glycidol, le triméthyloléthane, le triméthylol-1,1,1 propane, l'acide diméthylol propionique, le pentaérythrol, les produits d'estérification des diols et des polyols, par exemple : le di-, le tri-et le polyéthylène glycol, le di-, le tri-, le tétra-et le pentaérythrol, et l'hydroxypivalate de néopentyl glycol. De préférence, on utilise de préférence les diols ayant de 2 à 12 atomes de carbone, avec facultativement un atome d'oxygène placé entre deux atomes de carbone successifs. Plus particulièrement, on utilise de préférence un diol ayant de 2 à 8 atomes de carbone, par exemple l'éthylène glycol, le diméthyl-2,2 propanediol-1,3, le méthyl-2 propyl-2 propanediol-1,3, le néopentylglycol, l'hexanediol-1,6 ou un dérivé comme l'hydroxypivalate de néopentylglycol.

Parmi les exemples d'acides carboxyliques ou de dérivés, on peut citer les acides dicarboxyliques aliphatiques et cycloaliphatiques, par exemple : l'acide maléique, l'anhydride maléique, l'acide fumarique, l'acide itaconique, l'acide citraconique, l'acide malonique, l'acide succinique, l'acide glutarique, l'acide adipique, l'acide azélaïque, l'acide triméthyladipique, l'acide tétrahydrophtalique, l'acide hexahydrophtalique, l'acide endométhylène tétrahydrophtalique et l'acide hexachloroendométhylène tétrahydrophtalique, les acides carboxyliques aromatiques, par exemple l'acide o-phtalique, l'anhydride phtalique, l'acide dichlorophtalique, l'acide isophtalique, l'acide téréphtalique, le diméthyl-téréphtalate, l'acide trimellitique et l'acide pyromellitique, l'acide benzoïque, les acides gras ramifiés ou non-ramifiés, par exemple : l'acide valérique, l'acide heptanoïque, l'acide éthyl-2 hexanoïque, l'acide pélargonique, l'acide isononanoïque, l'acide laurique, les acides gras d'huiles de coco, de lin, de tournesol ou de pin, l'acide linoléïque, l'acide stéarique et les acides gras ramifiés ayant de 18 à 22 atomes de carbone. On préfère utiliser un acide di-ou tricarboxylique aliphatique, cycloaliphatique ou aromatique ayant de 4 à 10 atomes de carbone, plus particulièrement l'acide adipique, l'acide azélaïque, l'acide isophtalique, l'acide téréphtalique, l'acide orthophtalique ou un dérivé comme l'anhydride phtalique.

On utilise de préférence un polyester hydroxy-fonctionnel aromatique ou non-aromatique saturé.

La Demanderesse a également trouvé qu'il était préférable d'utiliser un mélange de 70 à 100 mole % de diacides aromatiques et de 0 à 30 mole % de diacides aliphatiques pour former le polyester hydroxyfonctionnel linéaire.

Selon un mode d'exécution préférentiel de la présente invention, on utilise de 80 à 100 mole % d'un diacide aromatique tel que acide téréphtalique, phtalique, ou isophtalique, et de 0 à 20 mole % d'un diacide aliphatique tel que acide adipique ou azélaïque.

Les diisocyanates aliphatiques ou cycloaliphatiques convenant pour préparer les polyesteruréthanes de l'invention sont les composés comportant une chaîne aliphatique ou cycloaliphatique ayant de 4 à 10 atomes de carbone entre les deux fonctions isocyanate, cette chaîne pouvant être substituée par un ou plusieurs groupements méthyle ou éthyle. Comme exemples de diisocyanates aliphatiques ou cycloaliphatiques, on peut citer le diisocyanato-1,4 butane, le diisocyanato-1,6 hexane (en abrégé HMDI), le diisocyanato-1,6 triméthyl-2,2,4 hexane (en abrégé TMDI) le diisocyanato-1,10 décane, le diisocyanato-1,4 cyclohexane, ou encore l'isocyanato-5 isocyanatométhyl-1 triméthyl-1,3,3 cyclohexane (ou diisocyanate d'isophorone, en abrégé IPDI), ou leurs mélanges.

La nature du diisocyanate influence les propriétés des revêtements obtenus à partir des résines polyesteruréthanes de l'invention. En règle générale, la flexibilité est plus élevée et la dureté plus faible quand on utilise un diisocyanate aliphatique, et ce d'autant plus que la chaîne est longue. Inversément, un diisocyanate cycloaliphatique donne une flexibilité plus faible et une dureté plus élevée.

La proportion de diisocyanate est déterminée de 3 à 35 % par rapport au poids de polyester (et de préférence de 5 à 20 %), de telle manière que le polyesteruréthane ait un indice hydroxyle compris entre 10 et 120 et de préférence entre 20 et 100.

Plus particulièrement encore, la Demanderesse a trouvé que des polyesteruréthanes ayant un indice hydroxyle compris entre 20 et 50 convenaient parfaitement dans les compositions de l'invention.

La réaction du polyester hydroxy-fonctionnel avec le diisocyanate aliphatique est effectuée en solution dans un solvant aromatique ayant un point d'ébullition suffisamment élevé, et sous atmosphère inerte, généralement sous azote. Comme solvant aromatique, on peut citer Shellsol AB ou Solvesso 200 (Shellsol et Solvesso sont des marques déposées). On porte la solution de polyester à une température supérieure à 100°C, généralement comprise entre 140 et 180°C, et on ajoute le diisocyanate goutte à goutte. Après la fin de l'addition, on maintient la solution à cette température jusqu'à achèvement de la réaction.

Les compositions de peinture pour métal selon la présente invention comprennent comme résine un polyesteruréthane de l'invention.

Les compositions de peinture selon l'invention contiennent également un agent réticulant du polyesteruréthane hydroxy-fonctionnel. Parmi les exemples d'agents réticulants bien adaptés, on peut citer les résines aminées contenant des groupes N-méthylol et/ou N-méthyloléther, par exemple ceux que l'on peut obtenir en faisant réagir un aldéhyde, par exemple le formaldéhyde, avec un composé contenant des fonctions amines ou amides comme la mélamine, l'urée, la N,N'-éthylène urée, la dicyandiamide et la benzoguanamine; la préparation de ces composés est décrite dans "Methoden der organischen Chemie", HoubenWeyl, Volume 14/2, pp. 319-371 (1963). Il est préférable que ces composés soient partiellement ou entièrement éthérifiés avec des alcools ayant de 1 à 6 atomes de carbone, par exemple avec du méthanol, de l'éthanol, du n-propanol, de l'isopropanol, du n-butanol, de l'isobutanol, de l'alcool amylique, de l'hexanol, ou des mélanges de ces alcools. De préférence, on utilise une polyméthylol méthyl mélamine ayant de 4 à 6 groupes méthylol par molécule, dont au moins 3 groupes sont éthérifiés avec du méthanol, de l'éthanol, un propanol ou un butanol, ou avec un produit de condensation de formaldéhyde avec la N-N'-éthylène diurée éthérifié avec du butanol. On préfère plus particulièrement utiliser une hexalkoxymethylmélamine, dans laquelle le groupe alkoxy contient de.1 à 4 atomes de carbone. A la place ou en plus des agents réticulants décrits ci-dessus, il est bien connu dans l'art antérieur que d'autres agents réticulants peuvent être employés. La teneur de l'agent réticulant dans la composition est telle que le rapport pondéral polyesteruréthane/durcisseur est compris entre 50/50 et 95/5.

La composition de peinture selon l'invention contient également 20 à 70 % de son poids, et de préférence 40 à 60%, d'un solvant organique du polyesteruréthane hydroxy-fonctionnel, ayant un point d'ébullition de 100 à 310°C. Parmi les exemples de solvants, on peut citer l'alcool benzylique, les solvants aromatiques tels ceux disponibles dans le commerce sous les noms de Solvesso-100 ou Shellsol A, Solvesso -150 ou Shellsol AB, ou Solvesso-200, l'éther éthylique ou butylique de l'acétate d'éthylène glycol, l'isophorone, l'isobutyrate de triméthyl-2,2,4 pentanediol-1,3, le diisobutyrate de triméthyl-2,2,4 pentanediol-1,3, la cyclohexanone, le diméthylglutarate, le diméthylsébacate, le diméthyladipate, l'éther butylique de diglycol, la diméthylformamide, la N-méthylpyrrolidone, le carbonate de propylène, le diisopropylbenzène ou leurs mélanges.

Les compositions de peinture selon l'invention peuvent facultativement contenir un ou plusieurs pigments, un ou plusieurs colorants et/ou un ou plusieurs additifs. Comme exemples d'additifs, on peut citer : des agents dispersants des pigments, des agents influençant les propriétés rhéologiques et/ou thixotropiques, des anti-moussants, des stabilisants UV, des agents d'étalement, des plastifiants, des agents de brillance, et des accélérateurs de réticulation, comme l'acide para-toluène sulfonique ou un de ses dérivés bloqués. Les pigments que l'on peut utiliser sont des pigments habiteuls organiques ou inorganiques, qu'ils soient acides, neutres ou basiques. Si on le désire, les pigments peuvent avoir subi un pré-traitement pour modifier leurs propriétés. Comme exemples de pigments, on peut citer le dioxyde de titane, l'oxyde de fer rouge, le molybdate orange, le chromate de plomb, le noir de carbone, les pigments à base de phtalocyanine, ou encore les pigments métalliques comme l'acier inoxydable ou l'aluminium. Le rap

port pondéral pigment/résine varie généralement de 0 à 2; il vaut de préférence 0 (dans le cas d'un vernis) ou de 0,8 à 1,2 (dans le cas d'une peinture).

Les compositions de peinture selon l'invention peuvent être appliquées par des méthodes connues de l'homme de métier, notamment au moyen de brosse, rouleau, pistolet ou encore bain de trempage; elles peuvent également être appliquées selon un procédé électrostatique. Généralement, on applique les compositions sur du métal, prétraité ou non, par exemple du fer, de l'acier, du fer galvanisé, du fer-blanc ou de l'aluminium. Plus particulièrement, les compositions de peinture de l'invention sont destinées au prélaquage de tôles.

Les compositions de peinture selon l'invention sont réticulées ou cuites de la manière habituelle, par exemple dans le domaine de la tôle prélaquée en élevant la température du support à une valeur pic normalement comprise entre 200 et 280°C, ce qui est généralement réalisé en amenant le support revêtu pendant une courte période (généralement de 10 à 90 secondes) dans de l'air ou des gaz de combustion ayant une température de 250 à 400°C.

La présente invention se rapporte également à un procédé de revêtement pour métal avec une composition liquide comprenant comme résine un polyesteruréthane ayant un indice hydroxyle compris entre 10 et 120, préparé par réaction d'un polyester hydroxy-fonctionnel comportant environ deux groupes hydroxyles par molécule et ayant un indice hydroxyle compris entre 30 et 260 avec 3 à 35 % de son poids d' un diisocyanate aliphatique, et comprenant également un agent réticulant du polyesteruréthane hydroxy-fonctionnel en teneur telle que le rapport pondéral polyesteruréthane/durcisseur est compris entre 50/50 et 95/5, de 30 à 70 % en poids d'un solvant organique ayant un point d'ébullition de 140 à 310°C, et facultativement un ou plusieurs pigments, colorants et/ou additifs, cette composition étant appliquée sur un support et réticulée à une température de 150 à 280°C.

Les exemples suivants sont donnés afin d'illustrer l'invention et ne constituent en aucune manière une limitation.

Exemples illustrant la préparation des polymères hydroxy-fonctionnels.

Exemple 1 (A et A1)

a) Préparation du polyester

Dans un récipient de 5 l, on a mélangé :

-1118 g de néopentyl glycol,

-294 g d'acide isophtalique,

-488 g d'anhydride phtalique,

-296 g d'acide adipique, et

-2 g d'oxyde de dibutylétain (servant de catalyseur).

On a chauffé le mélange vers 160°C, puis élevé progressivement la température jusqu'à 240°C. La réaction a été arrêtée lorsque l'indice acide (exprimé en mgKOH/g) est descendu en dessous de 10. La résine ainsi obtenue est appelée "A" dans la suite du texte. Le tableau 1 reprend les proportions (exprimées en parties en poids) d'alcool et d'acides carboxyliques utilisées pour préparer la résine A, ainsi que certaines de ses propriétés. La viscosité à 25°C (exprimée en mPa·s) a été mesurée en solution à 75 % dans du Shellsol AB, à l'aide d'un viscosimètre Brookfield.

b) Préparation du polyesteruréthane

La résine A a été diluée à 75 % en poids dans du Shellsol AB. On a porté la solution à une température d'environ 160°C, puis on y a ajouté, goutte à goutte, et sous atmosphère d'azote, 520 g d'hexaméthylène diisocyanate. L'addition a pris une heure, et la réaction a été arrêtée après une demi-heure supplémentaire. La résine ainsi obtenue est appelée "A1" dans la suite du texte.

Les proportions d'alcool, d'acides carboxyliques et de diisocyanate utilisées pour préparer la résine A1, ainsi que certaines propriétés de cette résine, sont reprises dans le Tableau 2. La viscosité à 25°C (en mPa.s) a été mesurée en solution à 60 % dans un mélange 1 : 1 de Shellsol AB et d'acétate de l'éther méthylique de propylène glycol en abrégé MPA), à l'aide d'un viscosimètre Brookfield.

Exemples 2 à 7 et exemples comparatifs.

Le mode opératoire de l'exemple 1 a été répété, avec les proportions d'alcools, d'acides carboxyliques et de diisocyanates telles qu'indiquées aux Tableaux 1 et 2, avec addition d'environ 0,1 partie en poids de catalyseur. Quelques propriétés des résines obtenues sont également données. La fonctionnalité du polyester hydroxy-fonctionnel était de 2, excepté pour l'exemple 7 où elle était de 2,09.

Exemples illustrant l'utilisation des polymères hydroxy-fonctionnels dans des compositions de revêtement pour métal.

Exemple 8

On a préparé une composition de peinture blanche à haute brillance à partir des composants suivants :

-solution de résine A1 à 60 % en poids dans un solvant aromatique Solvesso 150 48,10% en poids

-hexaméthoxyméthylmélamine 5,36% en poids

-TiO$_2$ 30,00% en poids

-additif d'étalement Synsileen E 25(Synsileen est une marque déposée de DSM Resins) 0,48% en poids

-solution d'acide p-toluène sulfonique à 50% en poids dans l'isobutanol 0,24% en poids

-solvant aromatique Solvesso 150 15,82% en poids

On a appliqué une couche de 20 ± 1 um - (épaisseur de la couche sèche mesurée selon la méthode d'essai T1 de l'Association Européenne de Coil Coating, ECCA) sur une plaque d'aluminium de 0,6 mm d'épaisseur prétraitée Alodine - (Alodine est une marque déposée).

On a ensuite placé cette plaque revêtue pendant 30 secondes dans un four à 350°C, ce qui amène la température du métal à une valeur maximum (dite "température pic du métal") de 240°C.

La réticulation, et donc la résistance chimique du revêtement, a été évaluée par la résistance à la méthyl éthyl cétone: aucune altération du film n'a été observée après 100 doubles passages avec un chiffon imbibé de méthyl éthyl cétone.

On a vérifié que la brillance spéculaire, mesurée à 60° selon la méthode d'essai T2 de l'ECCA, est supérieure à 90.

On a également mesuré la résistance à la fissuration lors du pliage, selon la méthode d'essai ECCA-T7. La résistance à la fissuration par pliage à 180° est exprimée par la relation

$$T = \frac{\text{rayon minimum de pliage sans fissuration}}{\text{épaisseur du métal}}$$

et vaut 1,0.

La dureté du revêtement est évaluée par la mesure de l'indentation Buchholz selon la méthode d'essai ECCA-T12. Cette dureté est exprimée par la relation E = 100/L, dans laquelle L est la longueur de l'indentation obtenue dans des conditions requises, et elle vaut 100.

Les propriétés du film sont reprises au Tableau 3.

Exemples 9 à 14 et exemples comparatifs.

Le mode opératoire de l'exemple 8 a été repété avec les résines indiquées au Tableau 3, qui reprend également les propriétés mesurées pour les revêtements obtenus.

La comparaison des exemples 8 à 10 respectivement avec les exemples comparatifs 8 à 10 montre que la modification de la résine polyester hydroxy-fonctionnelle par un diisocyanate aliphatique a amélioré tant la flexibilité que la dureté des revêtements obtenus.

Les deux exemples comparatifs 11 et 12 ont été réalisés avec des résines polyesters hydroxy-fonctionnelles ayant un indice hydroxyle comparable à celui des résines polyesteruréthanes hydroxy-fonctionnelles utilisées pour les exemples 11 et 12. Il apparaît que la dureté du revêtement de l'exemple 13 est améliorée, à flexibilité égale, tandis que la dureté et la flexibilité du revêtement de l'exemple 12 sont améliorées. Sans être lié par une théorie, la différence de propriétés entre les exemples 12 et 13 peut probablement s'expliquer par l'utilisation, dans ce dernier cas, d'un diisocyanate cycloaliphatique qui donne une structure plus rigide mais plus résistante au choc que lorsque l'on utilise un diisocyanate aliphatique comme dans le premier cas.

L'exemple 13 montre une nette amélioration de la flexibilité et une légère amélioration de la dureté par rapport à l'exemple comparatif 13 où une résine ayant un indice hydroxyle comparatif a été utilisée.

Exemple 15

On a préparé une composition de couche primaire de revêtement pour métal en mélangeant les composants suivants :

-solution de résine H1 à 60% en poids dans un solvant aromatique Solvesso ·150 44,5% en poids

- solution de résine Epikote 1007 (Epikote est une marque déposée de Shell) à 50% en poids dans du xylène 4,7% en poids

| | |
|---|---|
| – hexaméthoxyméthylmélamine | 4,9% en poids |
| – $TiO_2$ | 4,5% en poids |
| – China clay C | 4,5% en poids |
| – Chromate de strontium | 5,2% en poids |
| – additif d'étalement Synsileen E 25 | 0,3% en poids |
| – solution d'acide phosphorique à 10% dans l'isopropanol | 2,0% en poids |
| – solvant aromatique Solvesso 150 | 29,4% en poids |

On a appliqué une couche de 5 ± 1 um - (épaisseur de la couche sèche déterminée d'après la méthode d'essai ECCA-T1) sur une plaque d'acier galvanisé pré-traité Bonder 1303 (Bonder est une marque déposée de Chemetall) de 0,75 mm d'épaisseur.

La couche primaire a été cuite en portant le métal à une température pic de 210°C par passage au four à 350°C pendant environ 35 secondes.

On a ensuite appliqué une couche de finition de 20±1 um (épaisseur de la couche sèche selon la méthode ECCA-T1) d'une peinture commerciale de finition au polyester siliconé PE 28 (SIGMA COATINGS), que l'on a cuite en portant l'acier à une température pic de 240°C par un second passage au four.

A titre comparatif, on a répété le mode opératoire de l'exemple ci-dessus en remplaçant la résine H1 par une résine G.

Pour évaluer les performances des revêtements obtenus, on a pratiqué différents essais dont les résultats figurent dans le Tableau 4.

1) Résistance à l'emboutissage Erichsen

On a déformé progressivement la plaque au moyen d'une bille de 20 mm de diamètre enfonçant l'envers de l'échantillon jusqu'à la rupture du métal.

L'adhérence du film de peinture est évaluée à l'aide de ruban adhésif TESA 4104 (Tesa est une marque déposée de BDF-Beiersdorf), et l'état du film sur le dôle est examiné. L'échelle d'évaluation comprend 3 notations:

a) examen du film et test de décollement

| notation | fissuration | décollement |
|---|---|---|
| 10 | non | non |
| 9 | faible(loupe 10X) | non |
| 8 | faible (oeil) | non |
| 7 | forte | non |
| 6 | non | oui |
| 5 | faible(loupe 10X) | oui |
| 4 | faible (oeil) | oui |
| 3 | forte | oui |
| 2 | | fort |
| 1 | | fort <u>sans</u> papier adhésif |

b) localisation du décollement

notation

(a) entre la couche primaire et la couche de finition

(b) entre le traitement de surface et la couche primaire

c) importance du décollement au papier adhésif :

notation

1 faible
2 moyen
3 fort

Les résultats de ce test sont repris, avec ceux des tests suivants, dans le Tableau 4.

2) Adhérence OT

On a replié la plaque sur elle-même, et on a évalué l'état du film et son adhérence à l'endroit de la pliure avec la même échelle que dans l'essai précédent.

3) Adhérence entre couches

Il est de pratique courante de contrôler l'adhérence de la peinture de finition sur la couche primaire en grattant le revêtement à l'aide d'une pièce de monnaie. On attribue une cote subjective de 0/10 (mauvaise), 5/10 (moyenne) ou 10/10 - (bonne).

4) Adhérence sur les bords coupés

Après avoir coupé la tôle revêtue, on évalue l'adhérence du revêtement au moyen de ruban adhésif et on attribue également une note subjective de 0, de 5 ou 10/10.

5) Résistance au choc

On évalue la résistance à la déformation brutale en suivant la méthode d'essai ECCA-T5.
On évalue la fissuration et l'adhérence du film d'après l'échelle donnée ci-dessus.

6) Résistance au brouillard salin

Des échantillons ont été exposés au brouillard salin, dans les conditions de la méthode d'essai ECCA-T8, pendant 250, 500, 750 et 1000 heures.
L'infiltration de corrosion (exprimée en mm) a été évaluée à l'aide de ruban adhésif Tesa 4104, selon la méthode d'essai ECCA-T8.
Le cloquage a été évalué conformément à la norme ASTM-D-714-56 (1970). La grandeur des cloques est décrite sur une échelle numérique arbitraire allant de 10 (absence de cloques) à 0, tandis que la fréquence des cloques est décrite qualitativement sur une échelle à 4 niveaux allant de F - (peu de cloques) à D (cloques denses).
Les résultats des tests ci-dessus, figurant dans le Tableau 4, montrent que toutes les propriétés ont été améliorées par l'utilisation d'une composition de l'invention pour la couche primaire.

Exemple 16

On a préparé un polyester hydroxy-fonctionnel à partir de

Néopentyl glycol : 32,9 parties en poids

Hexane diol 1,6 : 17,1 " " "

Acide isophtalique : 36.6 " " "

Acide téréphtalique : 27,2 " " "

Cette résine polyester avait un indice hydroxyle de 86.2 et un indice acide de 6.4.

Le pourcentage molaire de diacide aliphatique par rapport à l'ensemble des acides est de 0 mole %.

On a préparé un polyesteruréthane à partir de 100 parties en poids de ce polyester et de 7,5 parties en poids de TMDI.

Le polyesteruréthane formé avait un indice hydroxyle de 41 et un indice acide de 5,0.

Les propriétés du polyesteruréthane obtenu sont indiquées au Tableau 3.

A titre de comparaison, on a déterminé les propriétés du polyester hydroxy-fonctionnel utilisé seul, sans avoir réagi avec le diisocyanate. Les résultats obtenus sont indiqués au Tableau 3.

TABLEAU 1

Composition (parties en poids) et propriétés des polyesters hydroxy-fonctionnels utilisés comme produits de départ ou dans des exemples comparatifs.

| exemple n° | 1 | 2 | 3 | comp. 4 & 5 | comp. 4 & 5 | 4 & 5 | comp. 6 | 6 | 7 |
|---|---|---|---|---|---|---|---|---|---|
| identification | A | B | C | D | E | F | G | H | I |
| éthylène glycol | | | | 9,9 | 10,5 | | | | 12,8 |
| néopentyl glycol | 55,9 | 36,2 | 48,9 | 47,3 | 16,6 | 17,7 | 31,4 | 33,4 | 19,1 |
| hexanediol-1,6 | | 18,9 | | | 17,5 | 18,6 | 16,4 | 16,1 | |
| hydroxypivalate de néopentyl glycol | | | | | | | | | 9,3 |
| triméthylol propane | | | | | | | | | 6,1 |
| anhydride phtalique | 24,4 | | 28,2 | 29,1 | 24,8 | 26,3 | | | |
| acide iso-phtalique | 14,7 | 29,1 | 17,1 | 17,6 | 37,4 | 31,8 | 60,9 | 53,2 | 38,0 |
| acide téré-phtalique | | 21,6 | | | | | | | 22,8 |
| acide adipique | 14,8 | 6,9 | 17,1 | 17,7 | 6,4 | 6,8 | 5,9 | 11,7 | 6,7 |
| résine polyester | 100 | 100 | 100 | 100 | 100 | 100 | 100 | 100 | 100 |
| % molaire ac.adipique/ acides | 28,58 | 13,40 | 28,52 | 28,60 | 10,04 | 11,19 | 9,93 | 20,0 | 11,12 |
| indice hydroxyle (mgKOH/g) | 204 | 174 | 66 | 34 | 36 | 92 | 37 | 63 | 103 |
| indice acide (mgKOH/g) | 11,3 | 2,5 | 11,2 | 10,7 | 9,8 | 8,7 | 8,3 | 4,6 | 10,0 |
| viscosité * à 25°C(Pa.s) | 5200 | 550 | 350 | 340 | 700 | 230 | 1080 | 420 | 300 |
| incorporée dans dans le revête-ment des exem-ples n°s | comp. 8 | comp. 9 | comp. 10 | comp. 11&12 | comp. 11&12 | | comp. 13&15 | | |

* La viscosité est mesurée en solution :
- résine A : à 75 % dans du Shellsol AB
- résines B et H : respectivement à 70 et 60 %, dans un mélange 1:1 de Shellsol AB et d'acétate de l'éther méthylique de propylène glycol
- autres résines : à 60% dans un mélange 1:1 de Shellsol AB et d'acétate d'éthyl glycol.

TABLEAU 2

Composition (parties en poids) et propriétés des polyesteruréthanes décrits dans les exemples.

| exemple n° | 1 | 2 | 3 | 4 | 5 | 6 | 7 |
|---|---|---|---|---|---|---|---|
| identification | A1 | B1 | C2 | F2 | F3 | H1 | I2 |
| éthylène glycol | | | | 10,5 | 10,5 | | 12,8 |
| néopentyl glycol | 55,9 | 36,2 | 48,9 | 17,7 | 17,7 | 33,4 | 19,1 |
| hexanediol-1,6 | | 18,9 | | 18,6 | 18,6 | 16,1 | |
| hydroxypivalate de néopentyl glycol | | | | | | | 9,3 |
| triméthylol propane | | | | | | | 6,1 |
| anhydride phtalique | 24,4 | | 28,2 | 26,3 | 26,3 | | |
| acide isophtalique | 14,7 | 29,1 | 17,1 | 31,8 | 31,8 | 53,2 | 38,0 |
| acide téréphtalique | | 21,6 | | | | | 22,8 |
| acide adipique | 14,8 | 6,9 | 17,1 | 6,8 | 6,8 | 11,7 | 6,7 |
| résine polyester | 100 | 100 | 100 | 100 | 100 | 100 | 100 |
| HMDI | 22,0 | 19,8 | | | | 5,3 | |
| TMDI | | | 10,0 | 6,2 | | | 11,0 |
| IPDI | | | | | 10,6 | | |
| indice hydroxyle (mgKOH/g) | 48 | 43 | 31 | 35 | 35 | 27 | 44 |
| indice acide (mgKOH/g) | 6,5 | 1,5 | 8,0 | 6,9 | 7,3 | 3,4 | 8,3 |
| viscosité *à 25°C (m.Pa.s) | 1120 | 8350 | 650 | 2340 | 2560 | 1700 | 6500 |
| incorporée dans les revêtements des exemples n°s | 8 | 9 | 10 | 11 | 12 | 13 | 14 |

* La viscosité est mesurée en solution
- résines A1 et H1 : à 60% dans un mélange 1:1 de MPA et Shellsol AB
- résine B1 : à 70% dans un mélange 1:1 de MPA et Shellsol AB
- autres résines : à 60% dans un mélange 1:1 de Shellsol AB et d'acétate d'éthyl glycol.

## TABLEAU 3

Propriétés des films de peinture.

| Exemple n° | Identification de la résine de base | Flexibilité T | Dureté E |
|---|---|---|---|
| 8 | A1 | 1 | 100 |
| 9 | B1 | 1 | 97 |
| 10 | C2 | 1 | 97 |
| 11 | F2 | 1 | 100 |
| 12 | F3 | 1,5 | 103 |
| 13 | H1 | 0 | 95 |
| 14 | I2 | 1 | 102 |
| 16 | | 1 | 100 |
| | | | |
| Comp.8 | A | 2 | 90 |
| Comp.9 | B | 1,5 | 94 |
| Comp.10 | C | 1,5 | 95 |
| Comp.11 & 12 | D | 1,5 | 95 |
| Comp.11 & 12 | E | 1,5 | 93 |
| Comp.13 | G | 0,5 | 94 |
| Comp.16 | | 1 | 97 |

TABLEAU 4

|                                             | Exemple 14 | Exemple comparatif |
|---------------------------------------------|:----------:|:------------------:|
| résine utilisée pour la couche primaire     | H1         | G                  |
| résistance à l'emboutissage Erichsen        | 4 (b) 1    | 3 (b) 3            |
| adhérence O T                               | 3 (b) 1    | 3 (b) 3            |
| adhérence entre couches                     | 10/10      | 5/10               |
| adhérence sur les bords coupés              | 10/10      | 0/10               |
| résistance au choc                          | 8          | 3 (a) 2            |
| résistance au brouillard salin :            |            |                    |
| a) infiltration de corrosion :              |            |                    |
|     après 250 heures    | 1          | 2                  |
|     après 500 heures    | 1          | 2                  |
|     après 750 heures    | 6          | 7                  |
|     après 1000 heures   | 6          | 11                 |
| b) cloquage : après 250 heures              | 10         | 10                 |
|     après 500 heures    | 10         | 6 F                |
|     après 750 heures    | 10         | 6 F                |
|     après 1000 heures   | 10         | 6 F                |

## Revendications

1) Polyesteruréthane hydroxy-fonctionnel destiné à être incorporé dans des compositions de peinture pour revêtements de supports métalliques, caractérisé en ce qu'il consiste en le produit de réaction d'un polyester comportant environ deux groupes hydroxyles par molécule et ayant un indice hydroxyle compris entre 30 et 260, avec un diisocyanate aliphatique ou cycloaliphatique de telle manière que le polyesteruréthane obtenu ait un indice hydroxyle compris entre 10 et 120.

2) Polyesteruréthane hydroxy-fonctionnel selon la revendication 1 caractérisé en ce que le polyester est un polyester hydroxy-fonctionnel linéaire à taux de fonctionnalité d'environ 2.

3) Polyesteruréthane hydroxy-fonctionnel selon la revendication 2 caractérisé en ce que le polyester hydroxyfonctionnel linéaire est préparé à partir d'un mélange de 70 à 100 mole % de diacides aromatiques et de 0 à 30 moles % de diacides aliphatiques.

4) Polyesteruréthane hydroxy-fonctionnel selon l'une quelconque des revendications 1 à 3, caractérisé en ce que le polyester utilisé pour la réaction a un indice hydroxyle compris entre 50 et 200.

5) Polyesteruréthane hydroxy-fonctionnel selon l'une quelconque des revendications 1 à 4, caractérisé en ce que l'on utilise pour la réaction de 3 à 35 % en poids de diisocyanate, calculé par rapport au poids de polyester.

6) Polyesteruréthane hydroxy-fonctionnel selon la revendica tion 5, caractérisé en ce que l'on utilise pour la réaction de 5 à 20 % en poids de diisocyanate, calculé par rapport au poids de polyester.

7) Polyesteruréthane hydroxy-fonctionnel selon l'une quelconque des revendications 1 à 6, caractérisé en ce que le diisocyanate aliphatique ou cycloaliphatique utilisé pour la réaction comporte une chaîne aliphatique ou cycloaliphatique ayant de 4 à 10 atomes de carbone entre les deux fonctions isocyanate, cette chaîne pouvant facultativement être substituée par un ou plusieurs groupements méthyle ou éthyle,

8) Polyesteruréthane hydroxy-fonctionnel selon la revendication 7, caractérisé en ce que le diisocyanate aliphatique ou cycloaliphatique utilisé pour la réaction est choisi parmi le diisocyanato-1,4 butane, le diisocyanato-1,6 hexane, le diisocyanato-1,6 triméthyl-2,2,4 hexane, le diisocyanato-1,10 décane, le diisocyanato-1,4 cyclohexane, et l'isocyanato-5 isocyanatométhyl-1 triméthyl-1,3,3 cyclohexane.

9) Polyesteruréthane hydroxy-fonctionnel selon l'une quelconque des revendications 1 à 8, caractérisé en ce qu'il est obtenu avec un indice hydroxyle compris entre 20 et 100, et de préférence de 20 à 50.

10) Procédé de préparation du polyesteruréthane hydroxy-fonctionnel défini selon l'une quelconque des revendications 1 à 9, caractérisé en ce que l'on fait réagir, en solution dans un solvant aromatique et à une température supérieure à 100°C, le polyester avec de 3 à 35 % de son poids du diisocyanate ajouté progressivement, et en ce que l'on récupère le polyesteruréthane hydroxy-fonctionnel.

11) Composition de peinture pour revêtement de supports métalliques ayant des propriétés améliorées, comprenant une résine, un agent réticulant et un solvant de la résine, contenant en plus facultativement un ou plusieurs pigments, colorants et/ou additifs, caractérisée en ce qu'elle comprend comme résine un polyesteruréthane défini selon l'une quelconque des revendications 1 à 9.

12) Revêtement de surface métallique, caractérisé en ce qu'il est obtenu à partir de la composition de peinture définie à la revendication 11.

13) Revêtement de surface métallique selon la revendication 12, caractérisé en ce qu'il est obtenu par réticulation de la composition de peinture à une température de 150 à 280°C.